# EUROPÄISCHE PATENTSCHRIFT

(11) **EP 2 885 194 B1**
(45) Veröffentlichungstag und Bekanntmachung des Hinweises auf die Patenterteilung: **20.07.2016**
(21) Anmeldenummer: 13744544.1
(22) Anmeldetag: 01.08.2013
(51) Int. Cl.: B62D 6/00

(54) **VERFAHREN FÜR DEN BETRIEB EINER ELEKTRISCHEN HILFSKRAFTLENKUNG FÜR EIN KRAFTFAHRZEUG**
METHOD FOR OPERATING AN ELECTRIC POWER ASSISTED STEERING SYSTEM FOR A MOTOR VEHICLE
PROCÉDÉ DE FONCTIONNEMENT D'UNE DIRECTION ASSISTEE ELECTRIQUE POUR UN VÉHICULE A MOTEUR

(30) Priorität: 20.08.2012 DE 102012107597
(43) Veröffentlichungstag der Anmeldung: 24.06.2015
(73) Patentinhaber: Robert Bosch Automotive Steering GmbH, 73527 Schwäbisch Gmünd (DE)
(72) Erfinder: HEILIG, Arnulf, 73529 Schwäbisch Gmünd (DE)
(86) Internationale Anmeldenummer: PCT/EP2013/066152
(87) Internationale Veröffentlichungsnummer: WO 2014/029597

(56) Entgegenhaltungen:
- EP-A2- 2 050 655
- DE-A1- 10 325 587
- US-A1- 2006 000 663

## Beschreibung

Die Erfindung betrifft ein Verfahren zum Betrieb einer elektrischen Hilfskraftlenkung nach dem Oberbegriff des Anspruchs 1.

Aus dem Stand der Technik sind verschiedene Methoden zur Generierung einer Motormoment- Sollvorgabe für einen Servomotor bekannt:
Die DE 101 15 018 A1 offenbart eine Fahrzeuglenkung, bei der ein Zustandsregler mittels Zustandsgrößen des Fahrzeugs eine Stellgröße für die Steuervorrichtung erzeugt, bei dem die vom Fahrer aufzubringende Lenkkräfte minimal wären. Ausgehend von dieser momentenfreien Lenkung kann eine Führungsgröße aufgeschaltet werden.

Die DE 10 2009 002 703 A1 offenbart eine Regelungsstruktur zur Ermittlung einer Stellgröße zur Ansteuerung eines Momentenstellers in einer elektrischen Fahrzeuglenkung in Abhängigkeit von einem vorgegebenen Soll-Drehstabmoment, wobei ein Ist-Drehstabmoment erfasst wird, ein Differenzmoment aus dem Soll-Drehstabmoment und dem Ist-Drehstabmoment gebildet wird und die Stellgröße mittels eines output-feedback- Reglers in Abhängigkeit von dem Differenzmoment ermittelt wird.

In der EP 2 050 655 A2 wird ein Regelverfahren zur Erzeugung eines Unterstützungsmoments in Abhängigkeit eines von einem Drehmomentsensor erfassten Drehstabmoments offenbart, bei dem von einer Umkehrmomentbestimmungseinrichtung ein von der Reifenseite auf die Lenkradseite als Störung übertragenen Moments mittels eines Störungs-Beobachters anhand einer Auswertung von Drehmoment und Drehzahl des Servomotors ermittelt wird und als Kompensationsmoment eingeprägt wird.

Aufgabe vorliegender Erfindung ist es, ein Verfahren zur Ermittlung einer Soll-Vorgabe für ein Motormoment vorzuschlagen, welches gegenüber den bekannten Verfahren eine leicht vorzunehmende Grundabstimmung ermöglicht und gleichzeitig eine umfassende und präzise Beeinflussung des Lenkverhaltens und des an den Fahrer vermittelten Lenkgefühls ermöglicht.

Diese Aufgabe wird mit den kennzeichnenden Merkmalen des Hauptanspruchs gelöst.

Das Verfahren sieht vor, dass ein Soll-Vorgabewert aus zumindest zwei Motormoment-Komponenten gebildet wird, und zwar einer Motormoment-Vorsteuerungs-Komponente, die einen gesteuerten Anteil bildet, und einer Motormoment-Regler-Komponente, die einen geregelten Anteil bildet, wobei die Regelgröße ein Drehstabmoment ist.
Die beiden Motormoment-Komponenten werden dabei funktional miteinander verrechnet, um daraus den Soll-Vorgabewert für das Motormoment des Servomotors zu ermitteln.

Vorteilhafte Weiterbildungen des Verfahrens sind in den Unteransprüchen wiedergegeben, die anhand der Figurenbeschreibung näher erläutert werden.

Demnach ist es vorgesehen, dass zur Bestimmung eines Soll-Vorgabewerts die Motormoment-Vorsteuerungs-Komponente zumindest in Abhängigkeit eines Drehstabmoments (M_{DS}) ermittelt wird, wobei zusätzlich eine Fahrzeuggeschwindigkeit berücksichtigt sein kann, und die Motormoment-Regler-Komponente in Abhängigkeit einer Regeldifferenz aus dem Drehstabmoment und einem zahnstangenkraftbasierten Applikations-Drehstabmoment ermittelt wird.

Von Vorteil ist es dass die Motormoment-Vorsteuerungs-Komponente unter Verwendung einer Unterstützungskennlinie ermittelt wird, die zumindest in Abhängigkeit des Drehstabmoments ein Vorsteueranteil ermittelt. Zusätzlich kann die Unterstützungskennlinie in Abhängigkeit der Fahrzeuggeschwindigkeit parametriert sein, wobei Zwischenwerte interpoliert werden.

Eine bevorzugte Ausführungsform sieht vor, dass die Motormoment-Vorsteuerungs-Komponente von einem Regler bestimmt wird.
Hierbei kommt bevorzugt ein bereichsbegrenzter (saturierter) PID- Regler zum Einsatz.

Gemäß der Erfindung ist es vorgesehen, die Motormoment-Regler-Komponente auf einen lenkungsspezifischen maximal zustellbaren Grenzwert zu begrenzen. Dies erfolgt bevorzugt in Abgängigkeit der Fahrzeuggeschwindigkeit.

Des Weiteren ist es vorgesehen, dass die Motormoment-Vorsteuerungs-Komponente unter Verwendung einer Unterstützungskennlinie ermittelt wird, der als weitere Eingangsgröße eine Fahrzeuggeschwindigkeit zugeführt ist.

Das Applikations-Drehstabmoment wird bevorzugt unter Verwendung einer ermittelten Zahnstangenkraft und/oder weiterer lenkungsspezifischer oder fahrdynamischer Fahrzeuggrößen und/oder auf Grundlage unterschiedlicher Lenkfunktions-Komponenten ermittelt.

Die Motormoment-Komponenten werden nachfolgend funktional miteinander verrechnet, um daraus den Soll-Vorgabewert für das Motormoment zu ermitteln.

Gegenstand der Erfindung ist auch ein Computerprogramm mit Programmcodemitteln, um ein Verfahren gemäß der Erfindung durchzuführen, wenn das Programm auf einem Mikroprozessor eines Computers, insbesondere auf einem Steuergerät einer Hilfs- oder Fremdkraftlenkung, ausgeführt wird.

Gegenstand der Erfindung ist auch ein entsprechendes Steuergerät für den Betrieb einer Hilfs- oder Fremdkraftlenkung eingerichtet zur Durchführung eines Verfahrens gemäß der Erfindung oder zur Ausführung eines entsprechenden Computerprogramms, sowie eine Hilfs- oder Fremdkraftlenkung, ausgestattet mit einem entsprechenden Steuergerät.

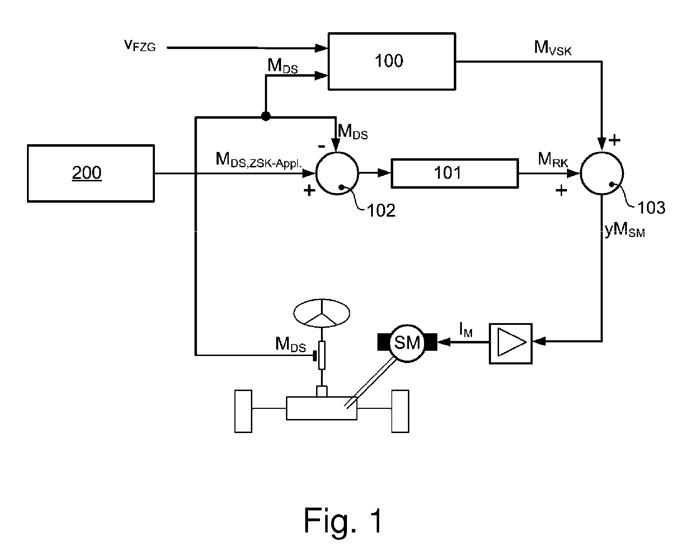

Figur 1 zeigt ein Strukturschaubild, anhand dessen eine bevorzugte Ausführungsform des erfindungsgemäßen Verfahrens erläutert wird.
Ein Vorsteuerungs-Modul 100 ermittelt anhand eines an der Lenksäule detektierten Drehstabmoments M_{DS} eine erste Komponente, die Motormoment-Vorsteuerungs-Komponente M_{VSK}. Diese Komponente repräsentiert einen gesteuerten Anteil des Motormoments.
Hierzu verwendet das Vorsteuerungs-Modul 100 zusätzlich die Fahrzeuggeschwindigkeit v_{FZG}. Das Modul 100 beinhaltet eine UnterstützungsKennlinie, die in Abhängigkeit des Drehstabmoments M_{DS} und der Fahrzeuggeschwindigkeit v_{FZG} die Motormoment-Vorsteuerungs-Komponente M_{VSK} ermittelt.

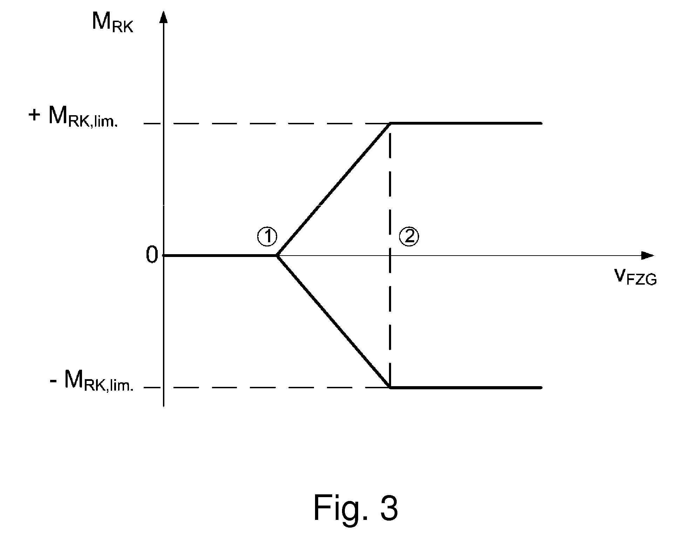

Des Weiteren ermittelt ein Drehstabmoment- Applikationsmodul 200 ein Applikations-Drehstabmoment M_{DS}, Appl. Diese Komponente repräsentiert einen geregelten Anteil des Motormoments.
Auf die Ermittlung des Werts der Applikations- Drehstabmoment M_{DS, Appl} wird in der Beschreibung zu Figur 3 näher eingegangen.

Diese Größe repräsentiert quasi eine Führungsgröße für eine nachfolgende Regelung und ist maßgeblich für das dem Fahrer zu vermittelnde Soll-Lenkgefühl. Das Applikations- Drehstabmoment M_{DS, Appl} wird als "Führungsgröße" verwendet, wobei eine Regeldifferenz in Bezug auf das Drehstabmoment M_{DS} mittels eines Regeldifferenz- Bestimmungsglieds 102 ermittelt wird. Mittels eines nachgeschalteten Reglers, das Drehstabverdrehungsregler-Modul 101, wird eine zweite Komponente, die Motormoment-Regel-Komponente M_{RK} ermittelt. Diese Komponente repräsentiert einen geregelten Anteil des Motormoments.
Der Regler ist bevorzugt als bereichsbeschränkter (saturierter) PID- Regler ausgeführt. Dies ermöglicht eine einfache und stabile Applikation für das jeweilige Fahrzeug.

Beide Komponenten werden mittels eines Zusammenführungsglieds 103 zur Bildung eines Sollvorgabewerts yM_{SM} für das durch den Servomotor SM abzugebende Motormoment M_{SM} verrechnet. Im einfachsten Fall erfolgt dies durch eine Summation beider Werte.
Der Sollvorgabewert yM_{SM} wird einer Endstufeneinheit zugeführt, die mittels einer untergeordneten feldorientierten Regelungsstufe (FOR) entsprechende Phasenströme I_{M} für den Servomotor erzeugt.

Die Motormoment-Vorsteuerungs-Komponente M_{VSK} wird zumindest in Abhängigkeit eines Drehstabmoments M_{DS} ermittelt und die Motormoment-Regler-Komponente M_{RK} wird in Abhängigkeit einer Regeldifferenz zwischen dem Drehstabmoment M_{DS} und dem Applikations-Drehstabmoment M_{DS, Appl} ermittelt. Das Drehstabmoment wird im Bereich der Lenksäule mittels eines geeigneten Sensors gemessen.

Im gezeigten Ausführungsbeispiel wird die Motormoment-Vorsteuerungs-Komponente M_{VSK} unter Verwendung einer Unterstützungskennlinie ermittelt, der als weitere Eingangsgröße die Fahrzeuggeschwindigkeit v_{FZG} zugeführt ist.

Die Vorteile des Verfahrens sind insbesondere darin zu sehen, dass mittels des Vorsteuerungs-Anteils M_{VSK} die Anforderungen hinsichtlich der Dynamik des Systems erfüllt werden kann, wobei gleichzeitig mittels des geregelten Anteils M_{RK} ein an den Fahrer zu vermittelndes "Soll"- Lenkgefühl überlagert werden kann. Schnelle Lenkbewegungen des Fahrers werden somit in Form einer Steuerung mit hoher Dynamik an das Lenksystem übertragen, gleichzeitig kann eine geregelte, in ihrer Auswirkung begrenzte Einflussnahme auf ein Fahrerlenkmoment nach Maßgabe eines Soll-Vorgabewerts vorgenommen werden.

Durch eine mittels des Vorsteuerungs-Moduls 100 initiierte Vorsteuerung für das Motormoment yM_{SM} wird insbesondere für den Fall, dass hohe Unterstützungsmomente erforderlich sind, eine "Grund-Unterstützung" durch den Servomotor in das Lenksystem eingeprägt. Diese Grund-Unterstützung ist von der Regelung ausgenommen und entspricht daher funktional gesehen einer "Grund-Unterstützungs-Steuerung".

Das Vorsteuerungs-Modul 100 ermittelt anhand der Fahrzeuggeschwindigkeit v_{FZG} und des Drehstabmoments M_{DS} eine Motormoment-Vorsteuerungs-Komponente M_{VSK}, entsprechend einer "Grund-Unterstützung".
Das Verhalten des Vorsteuerungs-Moduls 100 ist dabei derart implementiert, dass der Wert der Motormoment-Vorsteuerungs-Komponente M_{VSK} mit zunehmender Fahrzeuggeschwindigkeit verringert und mit zunehmendem Drehstabmoment erhöht wird.

Eine mittels des Drehstabverdrehungsregler-Moduls 101 initiierte Regelung des Drehstabmoments M_{DS} erweist sich insbesondere für den Fall, dass niedrige oder sehr kleine Unterstützungsmomente im "Anlenkungsbereich" auftreten, d.h. in einem Bereich relativ nahe zur Geradeausfahrt-Stellung des Lenkrades, als sehr vorteilhaft: Hierbei treten typischerweise relativ geringe Unterstützungskräfte in der Größenordnung von etwa 0,5Nm auf.
Hier übernimmt das Drehstabverdrehungsregler-Modul 101 die Funktion einer "echten" Regelung für das Drehstabmoment M_{DS} auf Grundlage einer Soll-Vorgabe M_{DS, Appl} des Drehstabmoment- Applikationsmoduls 200.
Durch die Übersetzung des Getriebes wirken sich diese kleinen Unterstützungsmomente entsprechend verstärkt auf das Lenkgefühl aus. Deshalb wirkt sich eine Regelung des Drehstabmoments besonders positiv auf das dem Fahrer vermittelte Lenkgefühl aus.

Von erheblichem Vorteil ist dabei, das Drehstabverdrehungsregler-Modul 101, d.h. der eigentliche Regler, der das Regel-Gesetz zur Regelung des Drehstabmoments beinhaltet, als saturierten PID- (Proportional-Integral-Differenzial) Regler auszuführen. Dies ermöglicht eine mit relativ wenig Aufwand durchzuführende Anpassung des Reglers für alle denkbaren Fahrsituationen.
Der saturierte Bereich des Reglers liegt in etwa in einem Bereich von +/- 0,5Nm.
Innerhalb dieses Bereichs ist eine geregelte, freie Beeinflussung des Fahrerlenkmoments möglich. Dies bewirkt, dass während einer Geradeausfahrt der Regelungsanteil dominiert während bei schnellen Lenkbewegungen der Steuerungsanteil überwiegt.
Aus diesem Grund wird die Motormoment-Regler-Komponente M_{RK} auf einen lenkungsspezifischen maximal zustellbaren Grenzwert +/- M_{RK,lim} begrenzt.
Die Begrenzung der Motormoment-Regler-Komponente M_{RK} erfolgt dabei in Abhängigkeit der Fahrzeuggeschwindigkeit v_{FZG}.

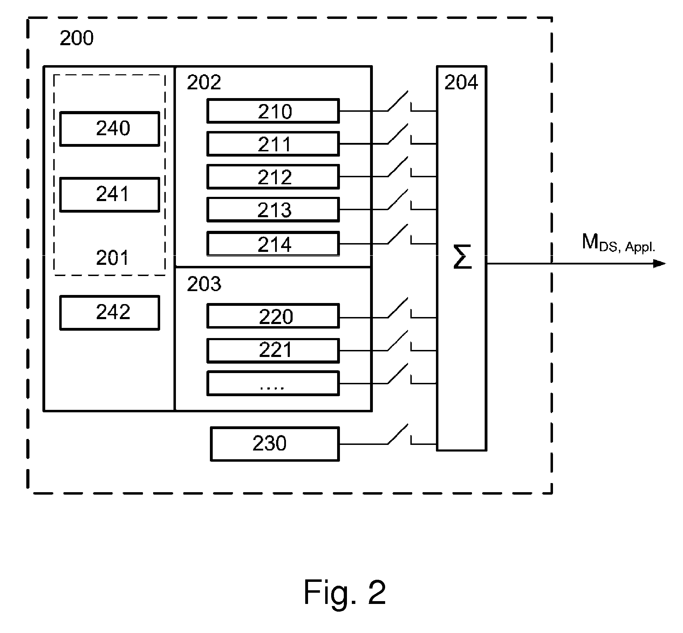

Figur 2 zeigt beispielhaft unterschiedliche Methoden der Generierung des Applikations-Drehstabmoments M_{DS,Appl}. Die Methoden können isoliert oder in Kombination miteinander angewendet werden.
Das Drehstabmoment- Applikationsmodul 200 beinhaltet ein Zahnstangenkraft-Ermittlungs-Modul 201, welches einen berechneten oder geschätzten Zahnstangenkraft (ZSK)- Wert ermittelt.
Des Weiteren enthält das Modul 200 einen Block 242, der lenkungsbezogene oder fahrzeugspezifischen Größen enthält, beispielsweise den momentanen Lenkwinkel, die Lenkwinkelgeschwindigkeit, die aktuelle Fahrgeschwindigkeit, Rotordrehzahl des Servomotors und weitere fahrdynamische Größen.
In der gezeigten Ausführung werden zwei auf unterschiedliche Weise ermittelte ZSK-Werte ermittelt:
Einen dynamischen Anteil 240 (ZSK-D) und ein komfortbezogenen Anteil 241 (ZSK-C). Die ZSK-D- Werte werden dabei aus lenkungsinternen Größen ermittelt, die ein Moment oder Kraft innerhalb der Lenkvorrichtung auf Grundlage mechanischen und/oder elektrischen Gleichungen beschreiben. Der ZSK-C Wert wird unter Verwendung von lenkungsexternen Fahrzeuggrößen, die einen Bewegungszustand beschreiben, auf Grundlage fahrphysikalischer Zusammenhänge ermittelt.

Beide ZSK- Größen können zu einer resultierenden Zahnstangenkraft miteinander kombiniert oder in einem beliebigen Verhältnis miteinander gemischt werden, je nach Fahrbedingungen. Die resultierende Zahnstangenkraft wird nachfolgend einzelnen Funktionseinheiten des Basis- Lenkunterstützungsmoduls 202 oder dem Zusatz-Lenkfunktions-Modul 203 zugeführt.

Die Funktionseinheiten des Basis- Lenkunterstützungsmoduls 202 können dabei folgende Bestandteile enthalten:
Ein Basis- Lenkmoment im Anlenkungs-Bereich 210, eine aktive Rücklauffunktion 211, eine Mittengefühls-Funktionseinheit 212, eine aktive Dämpfungs-Funktion 213 und eine Reibungs- und Hysterese- Kompensationseinheit 214.

Die Funktionseinheiten des Zusatz- Lenkfunktionsmodul 203 können folgende Bestandteile enthalten:
Eine Übersteuerassistenz- Funktion 220 und eine Untersteuerassistenz-Funktion 221.

Des Weiteren können übergeordnete Eingriffe seitens des Fahrzeugherstellers mittels Schnittestelle zu OEM-Funktionen 230 vorgesehen sein. Hierzu zählen autonome Lenkeingriffe, wie zum Beispiel Spurhaltung und Folgeführung oder das Einleiten von Ausweichmanövern.

Einige Funktionseinheiten 202, 203 erfordern zusätzlich oder ausschließlich die Verwendung von lenkungsbezogenen Größen des Blocks 242. Beispielsweise kann die aktive Dämpfungs-Funktion 213 einen dämpfungsspezifischen Anteil des Applikations- Drehstabmoment allein auf Grundlage der momentanen Rotorgeschwindigkeit des Servomotors ermitteln.

In Verbindung mit dem in Figur 1 beschriebenen Ausführung der Erfindung ist es demnach vorgesehen, dass das Applikations-Drehstabmoment (M_{DS, Appl}) unter Verwendung einer ermittelten Zahnstangenkraft (RFM-C, RFM-D) und/oder mittels lenkungsspezifischer oder fahrdynamischer Fahrzeuggrößen auf Grundlage unterschiedlicher Lenkfunktions-Komponenten 210, 211, 212, 113, 214, 220, 220, 221, 230 bestimmt werden.

Mittels einer Summations- oder Gewichtungsstelle 204 werden alle ermittelten Funktionskomponenten zu Bildung eines gesamt- Applikations- Drehstabmoments M_{DS,Appl.} verrechnet.
Im einfachsten Fall werden alle Komponenten mittels einer Additionsstelle 204 aufaddiert, um das gesamt- Applikations- Drehstabmoment M_{DS,Appl.} zu ermitteln.

Figur 3 zeigt eine Begrenzung des maximal zulässigen Anteils der Motormoment-Regler-Komponente M_{RK} in Form einer Hüllkurve.

Die Begrenzung erfolgt bevorzugt in Abhängigkeit der Fahrzeuggeschwindigkeit v_{FZG}. Vom Stillstand an bis zu einer Geschwindigkeit von in etwa 10 bis 15 km/h (Punkt 1) beträgt der geregelte Anteil 0 Nm, ab dieser Geschwindigkeit wird der maximal zulässige Anteil bis zu einer zweiten Geschwindigkeit (Punk 2) bis zu einem maximalen symmetrischen Wert von +/- M_{RK, lim} rampenförmig aufgeweitet.
Dieser Wert liegt bei etwa 0,3 bis 0,5 Nm.

### Bezugszeichenliste

- 100: Vorsteuerungs-Modul
- 101: Drehstabverdrehungsregler-Modul
- 102: Regeldifferenz- Bestimmungsglied
- 103: Zusammenführungsstelle

- 200: Drehstabmoment- Applikationsmodul
- 201: Zahnstangenkraft-Ermittlungs-Modul
- 202: Basis- Lenkunterstützungs-Modul
- 203: Zusatz-Lenkfunktions-Modul
- 204: Summationsstelle
- 205: Drehstab-Verdrehungsregler-Modul

- 210: Basis- Lenkmoment im Anlenkungs-Bereich
- 211: Aktiver Rücklauf
- 212: Mittengefühl
- 213: Aktive Dämpfung
- 214: Hysterese
- 220: Übersteuerassistent
- 221: Untersteuerassistent
- 230: Externe Lenkfunktionen
- 240: Zahnstangenkraft, Dynamik-Anteil (ZSK-D)
- 241: Zahnstangenkraft, Komfort-Anteil (ZSK-C)
- 242: lenkungsbezogene Größen
- M_{DS}: Drehstabmoment
- SM: Servomotor
- I_{M}: Servomotor-Strom
- yM_{SM}: Sollvorgabe für Motormoment
- M_{SM}: Motormoment
- M_{VSK}: Motormoment-Vorsteuerungs-Komponente
- M_{RK}: Motormoment-Regel-Komponente
- M_{DS, Appl.}: Applikations- Drehstabmoment
- v_{FZG}: Fahrzeuggeschwindigkeit

## Patentansprüche

1. Verfahren zur Bestimmung eines Soll-Vorgabewerts (yM_{SM}) für ein Motormoment eines elektrischen Servomotors in einer Hilfskraftlenkung für ein Kraftfahrzeug, **dadurch gekennzeichnet, dass** der Soll-Vorgabewert unter Verwendung
- einer Motormoment-Vorsteuerungs-Komponente (M_{VSK}), die einen gesteuerten Anteil bildet, und
- einer Motormoment-Regler-Komponente (M_{RK}), die einen geregelten Anteil bildet, wobei die Regelgröße ein Drehstabmoment (M_{DS}) ist, wobei
- beide Motormoment-Komponenten funktional miteinander verrechnet werden, um daraus den Soll-Vorgabewert (yM_{SM}) für das Motormoment (M_{SM}) des Servomotors (SM) zu ermitteln.

2. Verfahren zur Bestimmung eines Soll-Vorgabewerts (yM_{SM}) nach Anspruch 1, **dadurch gekennzeichnet, dass**
- die Motormoment-Vorsteuerungs-Komponente (M_{VSK}) zumindest in Abhängigkeit eines Drehstabmoments (M_{DS}) ermittelt wird, und
- die Motormoment-Regler-Komponente (M_{RK}) in Abhängigkeit einer Regeldifferenz zwischen dem Drehstabmoment (M_{DS}) und einem Applikations-Drehstabmoment (M_{DS, Appl.}) ermittelt wird.

3. Verfahren nach Anspruch 1 oder 2, **dadurch gekennzeichnet, dass** die Motormoment-Regler-Komponente (M_{RK}) von einem Regler (101) bestimmt wird.

4. Verfahren nach Anspruch 3, **dadurch gekennzeichnet, dass** die Motormoment-Regler-Komponente (M_{RK}) auf einen lenkungsspezifischen maximal zustellbaren Grenzwert (+/- M_{RK,lim}) begrenzt wird.

5. Verfahren nach Anspruch 3 oder 4, **dadurch gekennzeichnet, dass** die Begrenzung der Motormoment-Regler-Komponente (M_{RK}) in Abhängigkeit der Fahrzeuggeschwindigkeit (v_{FZG}) erfolgt.

6. Verfahren nach einem der vorstehenden Ansprüche 3 bis 5, **dadurch gekennzeichnet, dass** der Regler (101) als bereichsbegrenzter PID- Regler ausgeführt ist.

7. Verfahren nach einem der vorstehenden Ansprüchen, **dadurch gekennzeichnet, dass** die Motormoment-Vorsteuerungs-Komponente (M_{VSK}) unter Verwendung einer Unterstützungskennlinie ermittelt wird, der als weitere Eingangsgröße eine Fahrzeuggeschwindigkeit (v_{FZG}) zugeführt ist.

8. Verfahren nach einem der vorstehenden Ansprüchen, **dadurch gekennzeichnet, dass** das Applikations-Drehstabmoment (MDS_{, Appl}) unter Verwendung einer ermittelten Zahnstangenkraft (RFM-C, RFM-D) wird und/oder weiterer lenkungsspezifischer oder fahrdynamischer Fahrzeuggrößen bestimmt wird.

9. Verfahren nach Anspruch 8, **dadurch gekennzeichnet**, das Applikations-Drehstabmoment (M_{DS, Appl}) auf Grundlage unterschiedlicher Lenkfunktions-Komponenten ermittelt wird.

10. Computerprogramm mit Programmcodemitteln, um ein Verfahren gemäß einem der Ansprüche 1 bis 9 durchzuführen, wenn das Programm auf einem Mikroprozessor eines Computers, insbesondere auf einem Steuergerät einer Hilfs- oder Fremdkraftlenkung, ausgeführt wird.

11. Steuergerät einer Hilfs- oder Fremdkraftlenkung eingerichtet zur Durchführung eines Verfahrens nach einem der Ansprüche 1 bis 7 oder zur Ausführung eines Computerprogramms nach Anspruch 8.

12. Hilfs- oder Fremdkraftlenkung mit einem Steuergerät nach Anspruch 11.

## Claims

1. Method for determining a desired preset value (yM_{SM}) for a motor torque of an electric servomotor in a power assisted steering system for a motor vehicle,
**characterized in that** the desired preset value using
- a motor torque pilot control component (M_{VSK}) which forms a open-loop controlled portion, and
- a motor torque closed-loop controller component (M_{RK}) which forms a closed-loop controlled portion, wherein the closed-loop control variable is a torsion bar torque (M_{DS}), wherein
- the two motor torque components are functionally combined with one another in order to determine therefrom the desired preset value (yM_{SM}) for the motor torque (M_{SM}) of the servomotor (SM).

2. Method for determining a desired preset value (yM_{SM}) according to Claim 1, **characterized in that**
- the motor torque pilot control component (M_{VSK}) is determined at least as a function of a torsion bar torque (M_{DS}), and
- the motor torque closed-loop controller component (M_{RK}) is determined as a function of a closed-loop control difference between the torsion bar torque (M_{DS}) and an application torsion bar torque (M_{DS, Appl.}).

3. Method according to Claim 1 or 2, **characterized in that**
the motor torque closed-loop controller component (M_{RK}) is determined by a closed-loop controller (101).

4. Method according to Claim 3, **characterized in that** the motor torque closed-loop controller component (M_{RK}) is limited to a steering-specific, maximum deliverable limiting value (+/- M_{RK,lim}).

5. Method according to Claim 3 or 4, **characterized in that** the motor torque closed-loop controller component (M_{RK}) is limited as a function of the vehicle speed (v_{FZG}).

6. Method according to one of the preceding Claims 3 to 5, **characterized in that** the closed-loop controller (101) is embodied as a range-limited PID controller.

7. Method according to one of the preceding claims, **characterized in that** the motor torque pilot control component (M_{VSK}) is determined using an assistance characteristic curve to which a vehicle speed (v_{FZG}) is fed as a further input variable.

8. Method according to one of the preceding claims, **characterized in that** the application torsion bar torque (MDS, _{Appl}) is is determined using a determined toothed rack force (RFM-C, RFM-D) and/or further steering-specific or vehicle movement dynamics vehicle variables.

9. Method according to Claim 8, **characterized in that** the application torsion bar torque (M_{DS}, _{Appl}) is determined on the basis of different steering function components.

10. Computer program having program code means in order to carry out a method according to one of Claims 1 to 9 when the program is executed on a microprocessor of a computer, in particular on a control unit of a power assisted steering system or power steering system.

11. Control unit of power assisted steering system or a power steering system configured for carrying out a method according to one of Claims 1 to 7 or for executing a computer program according to Claim 8.

12. Power assisted steering system or power steering system having a control unit according to Claim 11.

## Revendications

1. Procédé de définition d'une valeur prédéfinie de consigne (yM_{SM}) pour un couple moteur d'un servomoteur électrique dans une direction assistée pour un véhicule automobile, **caractérisé en ce que** la valeur prédéfinie de consigne en utilisant
- une composante de commande pilote de couple moteur (M_{VSK}), laquelle forme une part commandée, et
- une composante de régulateur de couple moteur (M_{RK}), laquelle forme une part régulée,
la grandeur régulée étant un couple de barre de torsion (M_{DS}),
- les deux composantes de couple moteur étant calculées fonctionnellement ensemble afin de déterminer à partir de celles-ci la valeur prédéfinie de consigne (yM_{SM}) pour le couple moteur (M_{SM}) du servomoteur (SM).

2. Procédé de détermination d'une valeur prédéfinie de consigne (yM_{SM}) selon la revendication 1, **caractérisé en ce que**
- la composante de commande pilote de couple moteur (M_{VSK}) est déterminée au moins en fonction d'un couple de barre de torsion (M_{DS}), et
- la composante de régulateur de couple moteur (M_{RK}) est déterminée en fonction d'une différence de régulation entre le couple de barre de torsion (M_{DS}) et un couple de barre de torsion d'application (M_{DS}, _{Appl}).

3. Procédé selon la revendication 1 ou 2, **caractérisé en ce que** la composante de régulateur de couple moteur (M_{RK}) est définie par un régulateur (101).

4. Procédé selon la revendication 3, **caractérisé en ce que** la composante de régulateur de couple moteur (M_{RK}) est limitée à une valeur limite (+/- M_{RK,lim}) maximale pouvant être approchée, spécifique à la direction.

5. Procédé selon la revendication 3 ou 4, **caractérisé en ce que** la limitation de la composante de régulateur de couple moteur (M_{RK}) est effectuée en fonction de la vitesse du véhicule (V_{FZG}).

6. Procédé selon l'une des revendications précédentes 3 à 5, **caractérisé en ce que** le régulateur (101) est réalisé sous la forme d'un régulateur PID limiteur de plage.

7. Procédé selon l'une des revendications précédentes, **caractérisé en ce que** la composante de commande pilote de couple moteur (M_{VSK}) est déterminée en utilisant une courbe caractéristique d'assistance à laquelle une vitesse du véhicule (V_{FZG}) est acheminée en tant que grandeur d'entrée supplémentaire.

8. Procédé selon l'une des revendications précédentes, **caractérisé en ce que** le couple de barre de torsion d'application (M_{DS}, _{Appl}) est est défini en utilisant une force de crémaillère (RFM-C, RFM-D) déterminée et/ou des grandeurs de véhicule supplémentaires, spécifiques à la direction ou dynamiques de conduite.

9. Procédé selon la revendication 8, **caractérisé en ce que** le couple de barre de torsion d'application (M_{DS}, _{Appl}) est défini en se basant sur différentes composantes de la fonction de direction.

10. Programme informatique comprenant des moyens de code de programme pour mettre en oeuvre un procédé selon l'une des revendications 1 à 9 lorsque le programme est exécuté sur un microprocesseur d'un ordinateur, notamment sur un contrôleur d'une direction assistée ou actionnée par une force externe.

11. Contrôleur d'une direction assistée ou actionnée par une force externe conçu pour mettre en oeuvre un procédé selon l'une des revendications 1 à 7 ou pour exécuter un programme informatique selon la revendication 8.

12. Direction assistée ou actionnée par une force externe équipée d'un contrôleur selon la revendication 11.
